# EUROPÄISCHE PATENTSCHRIFT

(11) **EP 2 894 026 B1**
(45) Veröffentlichungstag und Bekanntmachung des Hinweises auf die Patenterteilung: **18.04.2018**
(21) Anmeldenummer: 14150972.9
(22) Anmeldetag: 13.01.2014
(51) Int. Cl.: B29C 65/78, H01M 2/04, H01M 10/04, B29C 65/02, B29L 31/00

(54) **Schweißmaschine zur Herstellung von Batterien sowie Verfahren zur Herstellung von Batterien mittels einer Schweißmaschine**
Welding machine for the production of batteries and method for the production of batteries by means of a welding machine
Machine à souder destinée à la fabrication de batteries et procédé de fabrication de batteries au moyen d'une machine à souder

(43) Veröffentlichungstag der Anmeldung: 15.07.2015
(73) Patentinhaber: HADI Offermann Maschinenbau GmbH, 58285 Gevelsberg (DE)
(72) Erfinder: Kollera, Jürgen, 42289 Wuppertal (DE)
(74) Vertreter: Patentanwälte Dörner & Kötter PartG mbB

(56) Entgegenhaltungen:
- US-A- 3 883 369
- US-A- 4 485 959
- US-A- 5 598 964
- US-B1- 6 279 224

## Beschreibung

Die Erfindung betrifft eine Schweißmaschine zur Herstellung von Batterien, umfassend mindestens eine Schweißstation und ein Transportband, über welches die Batterien der Schweißstation zuführbar sind, wobei die Zuführung der Batterien über eine Kontrolleinrichtung steuerbar ist. Die Erfindung betrifft außerdem ein Verfahren zur Herstellung von Batterien mittels einer Schweißmaschine.

Bei den hier betrachteten Batterien oder Akkumulatoren handelt es sich um Industrie- oder Fahrzeugbatterien. Solche Batterien bestehen aus einem Gehäuse, welches von einem Kasten und einem Deckel gebildet ist. Die Batterien weisen in der Regel mehrere Zellen auf. Die Zellen sind in Reihe vom positiven Pol (sog. "Pluspol") der ersten Zelle an den negativen Pol (sog. "Minuspol") der zweiten Zelle und so weiter verbunden. Jede Zelle besteht aus einem Element, das positive Platten enthält, die alle miteinander verbunden sind, und negativen Platten, die ebenfalls alle verbunden sind. Sie sind einzeln durch dünne Schichten aus elektrisch isolierendem, porösen Material (sog. "Separatoren") getrennt, die als Abstandhalter zwischen den positiven und negativen Platten dienen, damit diese nicht kurzgeschlossen sind. Die Platten in einer Zelle wechseln sich mit einer positiven, einer negativen usw. ab. Als Platten finden überwiegend Metallgitter Anwendung, welche als Träger für eine aktive poröse Masse dienen, die auf die Gitter aufgebracht ist. Aber auch die Verwendung von Bleiplatten ist möglich.

Eine Schweißmaschine der eingangs genannten Art ist aus der US 4 485 959 A bekannt. Bei der Herstellung der Batterien werden Kasten und Deckel aus Kunststoff gespritzt. Nach der Bearbeitung und Bestückung des Kastens mit den Platten usw. sowie der Konfektionierung des Deckels, bspw. mit Polbuchsen o. dgl., werden Kasten und Deckel einer Schweißmaschine zugeführt, um das Verschweißen des Deckels mit dem Kasten herbeizuführen. Hierzu gelangt eine Batterie über eine Transportbahn in die Schweißmaschine. Die Batterie wird in der Maschine positioniert und fixiert. Der Deckel wird angehoben und eine Heizeinrichtung fährt zwischen Kasten und Deckel. Durch die Heizeinrichtung werden Schmelzkanten am Kasten und am Deckel aufgeheizt. Nach Erreichen der Schmelztemperatur fährt die Heizeinrichtung zurück. Kasten und Deckel werden dann zusammengepresst und gehalten. Nach dem Abkühlen ist der Deckel mit dem Kasten dicht verschweißt. Eine Maschine, bei der die Batterien auf einem drehbaren Karussell verschweißt werden, ist aus der US 3 883 369 A bekannt.

Die Zuführung der Batterien wird mit Hilfe einer Kontrolleinrichtung gesteuert. Durch die Kontrolleinrichtung wird eine geordnete Zuführung der Batterien erreicht, so dass während des Schweißvorgangs nachfolgende Batterien zurückgehalten werden. Zwar erfüllen die bekannten Schweißmaschinen die an sie gestellten Anforderungen. Allerdings ist Zeitaufwand für das Zu- und das Abführen der Batterien relativ hoch. Dies findet seine Ursache darin, dass während des Schweißvorgangs das Transportband still steht und erst nach Abschluss des Schweißvorgangs die geschweißte Batterie abtransportiert und eine zu schweißende Batterie an die Schweißmaschine herangeführt werden kann. Somit ist die Produktivität der Anlagen unzureichend.

Hier will die Erfindung Abhilfe schaffen. Der Erfindung liegt die Aufgabe zugrunde, eine Schweißmaschine zur Herstellung von Batterien zu schaffen, die eine höhere Produktivität aufweist. Gemäß der Erfindung wird diese Aufgabe dadurch gelöst, dass ein Arbeitsband vorgesehen ist, das benachbart zu dem Transportband angeordnet ist, und dass an der Längsseite des Transportbandes Transportschieber angeordnet sind, und dass das Arbeitsband parallel zu dem Transportband ausgerichtet ist.

Mit der Erfindung ist eine Schweißmaschine zur Herstellung von Batterien geschaffen, die eine höhere Produktivität aufweist. Durch die Verwendung eines zusätzlichen Arbeitsbandes besteht nämlich die Möglichkeit, auch während des Schweißvorgangs, bei dem sich die jeweiligen Batterien stationär in den Schweißstationen befinden, noch zu schweißende Batterien an die Schweißmaschinen heranzuführen bzw. bereits geschweißte Batterien abzutransportieren. Somit ist der Zeitraum, in dem der Schweißvorgang im Gange ist, nicht von einem Stillstand des Transportbandes geprägt. Vielmehr findet auch in diesem Stadium ein Transport statt. Diese parallele Ausrichtung von Arbeitsband und Transportband bietet insbesondere Vorteile in Bezug auf die Koordinierung der beiden Bänder sowie bei der Verlagerung der Batterien von dem einen auf das andere Band.

In Weiterbildung der Erfindung sind die Transportschieber in Richtung des Arbeitsbandes ausgerichtet. Diese Ausrichtung ermöglicht in einfacher Weise die Verlagerung der in die Schweißmaschine transportierten Batterien vom Transportband auf das Arbeitsband.

In Ausgestaltung der Erfindung ist zwischen Arbeitsband und Transportband eine Abdeckung angebracht. Mit Hilfe der Abdeckung ist ein hindernisfreies Verschieben der Batterien von dem einen auf das andere Band möglich. Gleichzeitig bietet die Abdeckung die Möglichkeit, die Bänder beabstandet zueinander anzuordnen, so dass eine einfachere Montage und Wartung gewährleistet ist.

In anderer Ausgestaltung der Erfindung sind die Transportschieber rechtwinklig zum Transportband ausgerichtet. Hierdurch ist eine genaue Verlagerung der Batterien vom Transportband auf das Arbeitsband möglich.

Äußerst bevorzugt sind an der Längsseite des Arbeitsbandes Arbeitsschieber angeordnet. Mit Hilfe der Arbeitsschieber besteht die Möglichkeit, Batterien vom Arbeitsband abzutransportieren.

In anderer Weiterbildung der Erfindung sind die Arbeitsschieber in Richtung des Transportbandes ausgerichtet. Hierdurch ist die Möglichkeit geschaffen, beispielsweise fertig geschweißte Batterien vom Arbeitsband auf das Transportband zu verlagern, um deren Abtransport zu ermöglichen.

Äußerst vorteilhaft sind die Arbeitsschieber zwischen den Schweißstationen angeordnet. Hierdurch ist die Möglichkeit geschaffen, eine Verlagerung der Batterien vom Arbeitsband auf das Transportband zu ermöglichen, während in den Schweißstationen ein Schweißvorgang im Gange ist.

Die Aufgabe wird darüber hinaus durch ein Verfahren zur Herstellung von Batterien mittels einer Schweißmaschine gelöst, die mindestens eine Schweißstation umfasst, wobei Batterien über ein Transportband in die Schweißmaschine gelangen und das Transportband von einer Kontrolleinrichtung angehalten wird, sobald vor jedem an der Längsseite des Transportbandes angeordneten Transportschieber eine Batterie positioniert ist, die Batterien im Anschluss von den Transportschiebern auf ein benachbart zu dem Transportband angeordnetes Arbeitsband geschoben werden, das parallel zu dem Transportband ausgerichtet ist, und von dem Arbeitsband in Schweißstationen zugeführt und von diesen verschweißt werden, und die Batterien danach von dem Arbeitsband aus den Schweißstationen transportiert werden.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die Ansicht einer Schweißmaschine zur Herstellung von Batterien;
- Figur 2: die Draufsicht auf die in Figur 1 dargestellte Schweißmaschine;

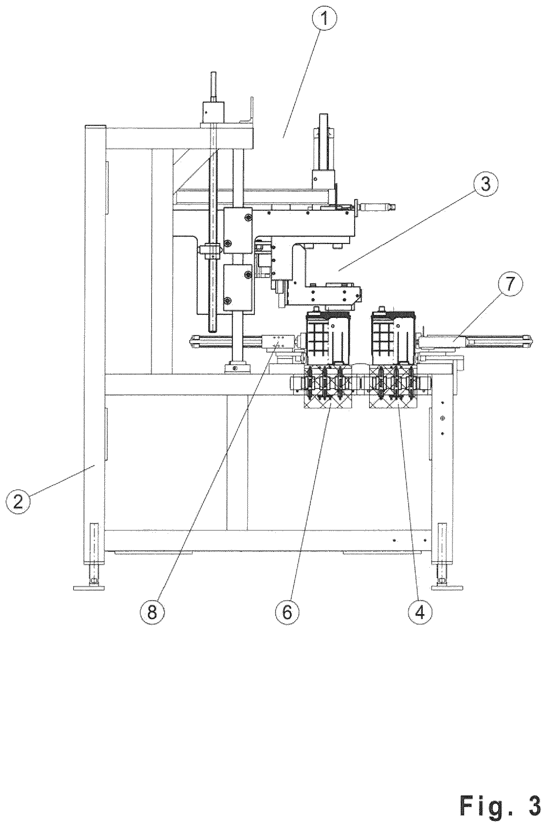

- Figur 3: die Seitenansicht von links auf die in Figur 1 dargestellte Schweißmaschine und

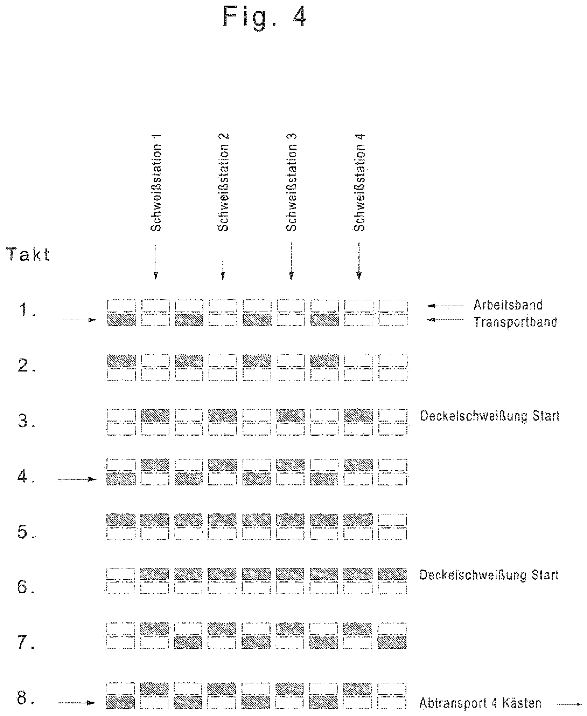

- Figur 4: die schematische Darstellung des Verfahrensablaufs nach der vorliegenden Erfindung.

Die als Ausführungsbeispiel gewählte Schweißmaschine zur Herstellung von Batterien umfasst vier Schweißstationen 1, die benachbart zueinander in einem Rahmen 2 angeordnet sind. Die Schweißstationen 1 sind in an sich bekannter Weise aufgebaut, weshalb auf eine eingehende Darstellung der Schweißstationen 1 an dieser Stelle verzichtet wird. Sie weisen jeweils eine Heizeinrichtung 3 auf.

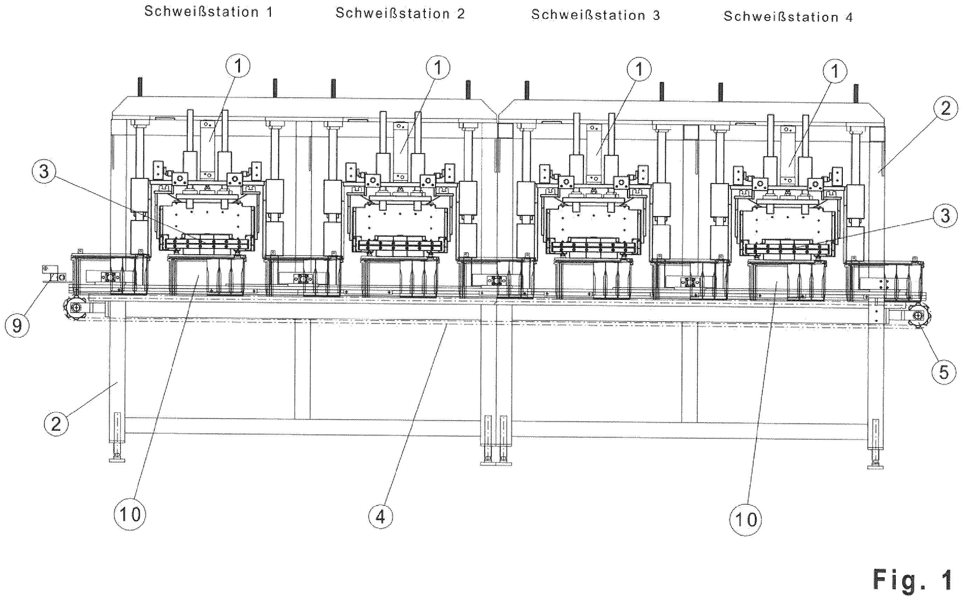

Die Schweißmaschine umfasst ein Transportband 4, über welches die Batterien 10 den Schweißstationen 1 zuführbar sind. Das Transportband 4 kann als Rollenbahn, Kette, oder sonstiges Förderband ausgebildet sein. Wie Figur 1 zu entnehmen ist, ist das Transportband 4 als Endlosband ausgeführt und über Rollen 5 umgelenkt bzw. vorgespannt. Das Transportband 4 ist über - nicht dargestellte - Elektromotoren angetrieben. Am Beginn des Transportbandes 4 befindet sich eine Kontrolleinrichtung 9, die den Transport der Batterien in die Schweißmaschine überwacht. Im Ausführungsbeispiel ist die Kontrolleinrichtung 9 von einer Lichtschranke gebildet. Andere Ausbildungen sind jedoch ebenfalls möglich.

Parallel zu dem Transportband 4 ist ein Arbeitsband 6 vorgesehen, welches benachbart zum Transportband 4 angeordnet ist. Im Ausführungsbeispiel ist das Transportband 4 parallel zum Arbeitsband 6 ausgerichtet. Das Arbeitsband 6 ist vergleichbar zum Transportband 4 ausgebildet. Ebenso wie das Transportband 4 ist das Arbeitsband 6 über Rollen angetrieben. Zwischen Arbeitsband 6 und Transportband 4 eine Abdeckung 11 angebracht.

An der Längsseite des Transportbandes 4 sind Transportschieber 7 angeordnet. Die Transportschieber 7 sind in Richtung des Arbeitsbandes 6 ausgerichtet, im Ausführungsbeispiel sind sie rechtwinklig zum Transportband 4 ausgerichtet. Vergleichbar zu den Transportschiebern 7 sind an der Längsseite des Arbeitsbandes 6 Arbeitsschieber 8 angeordnet, die in Richtung des Transportbandes 4 ausgerichtet sind. Die Arbeitsschieber 8 sind zwischen den Schweißstationen 1 angeordnet. Sie sind rechtwinklig zum Transportband 4 ausgerichtet.

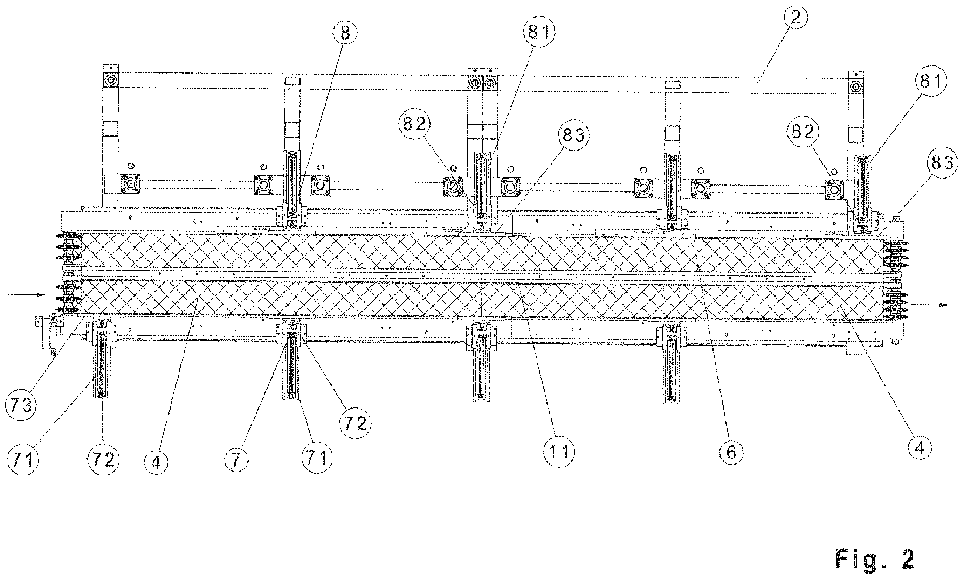

Die Transportschieber 7 und die Arbeitsschieber 8 sind vergleichbar zueinander aufgebaut. Im Ausführungsbeispiel sind die Schieber 7 und 8 elektromotorisch angetrieben. Eine andere Art des Antriebs, beispielsweise hydraulisch oder pneumatisch, ist ebenfalls möglich. Die Schieber 7 und 8 umfassen jeweils eine Kolbenstange 71, 81, die in einem Gehäuse 72, 82 geführt ist. An den einander zugewandten Enden ist an den Kolbenstangen 71, 81 jeweils eine Schiebeplatte 73, 83 befestigt. Erkennbar sind im Ausführungsbeispiel die Transportschieber 7 den Arbeitsschiebern 8 gegenüber angeordnet (Figur 2).

Bei der Herstellung von Batterien mittels der erfindungsgemäßen Schweißmaschine gelangen die Batterien 10 über das Transportband 4 in die Schweißmaschine. Die Batterien 10 sind beabstandet zueinander auf dem Transportband 4 angeordnet. Dabei werden zunächst vier Batterien 10 in die Schweißmaschine gefördert. Sobald die vierte Batterie die Kontrolleinrichtung 9 passiert hat, wird das Transportband 4 von der Kontrolleinrichtung 9 angehalten. In dieser Position befindet sich vor jedem der vier Transportschieber 7 jeweils eine Batterie 10. Die Batterien 10 werden dann mit Hilfe der Transportschieber 7 von dem Transportband 4 über die Abdeckung 9 auf das Arbeitsband 6 geschoben. Nach Erreichen des Arbeitsbandes 6 werden die Schiebeplatten 73 der Transportschieber 7 zurückgefahren. Sodann werden die Batterien 10 mit Hilfe des Arbeitsbandes 6 in die Schweißstationen 1 verfahren. Gleichzeitig werden über das Transportband 4 weitere vier Batterien 10 in die Schweißmaschine transportiert. Sobald die Batterien 10 ihre Position vor den Transportschiebern 7 eingenommen haben, wird das Transportband 4 von der Kontrolleinrichtung angehalten. Sodann werden die neu in die Schweißmaschine eingeführten Batterien mit Hilfe der Transportschieber 7 in der oben beschriebenen Weise auf das Arbeitsband 6 verfahren.

Nach Beendigung des Schweißvorgangs fährt das Transportband 4 die verschweißten Batterien aus der Schweißstation 1 heraus, wobei gleichzeitig die neu auf dem Arbeitsband 6 angeordneten Batterien 10 in die Schweißstation 1 einfahren. Nach Erreichen ihrer Arbeitsposition in der Schweißstation 1 beginnt der nächste Schweißvorgang. Gleichzeitig werden die fertig verschweißten Batterien 10 mit Hilfe der Arbeitsschieber 8 von dem Arbeitsband 6 auf das Transportband 4 verschoben. Im Anschluss werden die fertig verschweißten Batterien mit Hilfe des Transportbandes 4 aus der Schweißmaschine heraustransportiert, wobei gleichzeitig eine dritte Charge zu verschweißender Batterien mit Hilfe des Transportbandes 4 in die Schweißmaschine eingeführt werden. Sodann beginnt der vorbeschriebene Vorgang erneut, indem die zu verschweißenden Batterien mit Hilfe der Transportschieber 7 auf das Arbeitsband 6 verschoben werden, im Anschluss die fertig verschweißten Batterien aus der Schweißstation 1 heraustransportiert werden und gleichzeitig die neu zu verschweißenden Batterien 10 in die Schweißstationen 1 transportiert werden.

Mit Hilfe der erfindungsgemäßen Schweißmaschine bzw. des erfindungsgemäßen Schweißverfahrens sind die Taktzeiten beim Batterieschweißen wesentlich verkürzt. Durch das gleichzeitige Fördern von Batterien während des Schweißvorgangs ist eine Beschleunigung hervorgerufen, da aufgrund des parallel arbeitenden Transportvorgangs und des Schweißvorgangs Standzeiten der Batterien reduziert sind. Mit Hilfe der erfindungsgemäßen Ausgestaltung der Schweißmaschine bzw. des erfindungsgemäßen Verfahrens lassen sich um ein Drittel verkürzte Taktzeiten hervorrufen, so dass die Produktivität um ca. 30% höher ist, als dies bei herkömmlichen Schweißmaschinen zur Herstellung von Batterien der Fall ist.

## Patentansprüche

1. Schweißmaschine zur Herstellung von Batterien, umfassend mindestens eine Schweißstation (1) und ein Transportband (4), über welches die Batterien der Schweißstation (1) zuführbar sind, wobei die Zuführung der Batterien über eine Kontrolleinrichtung (9) steuerbar ist, wobei an der Längsseite des Transportbandes (4) Transportschieber (7) angeordnet sind, **dadurch gekennzeichnet, dass** ein Arbeitsband (6) vorgesehen ist, das benachbart zu dem Transportband (4) angeordnet ist, und dass das Arbeitsband (6) parallel zu dem Transportband (4) ausgerichtet ist.

2. Schweißmaschine nach Anspruch 1, **dadurch gekennzeichnet, dass**, die Transportschieber (7) in Richtung des Arbeitsbandes (6) ausgerichtet sind.

3. Schweißmaschine nach Anspruch 1 oder 2, **dadurch gekennzeichnet, dass** zwischen Arbeitsband (6) und Transportband (4) eine Abdeckung (11) angebracht ist.

4. Schweißmaschine nach einem oder mehreren der vorgenannten Ansprüche, **dadurch gekennzeichnet, dass** die Transportschieber (7) rechtwinklig zum Transportband (4) ausgerichtet sind.

5. Schweißmaschine nach einem oder mehreren der vorgenannten Ansprüche, **dadurch gekennzeichnet, dass** an der Längsseite des Arbeitsbandes (6) Arbeitsschieber (8) angeordnet sind.

6. Schweißmaschine nach Anspruch 5, **dadurch gekennzeichnet, dass** die Arbeitsschieber (8) in Richtung des Transportbandes (4) ausgerichtet sind.

7. Schweißmaschine nach Anspruch 6 oder 5, **dadurch gekennzeichnet, dass** die Arbeitsschieber (8) zwischen den Schweißstationen (1) angeordnet sind.

8. Verfahren zur Herstellung von Batterien mittels einer Schweißmaschine, die mindestens eine Schweißstation (1) umfasst, wobei Batterien (10) über ein Transportband (4) in die Schweißmaschine gelangen und das Transportband (4) von einer Kontrolleinrichtung (9) angehalten wird, sobald vor jedem an der Längsseite des Transportbandes (4) angeordneten Transportschieber (7) eine Batterie (10) positioniert ist, die Batterien (10) im Anschluss von den Transportschiebern (7) auf ein benachbart zu dem Transportband (4) angeordnetes Arbeitsband (6) geschoben werden, das parallel zu dem Transportband (4) ausgerichtet ist, und von dem Arbeitsband (6) den Schweißstationen (1) zugeführt und von diesen verschweißt werden, und die Batterien (10) danach von dem Arbeitsband (6) aus den Schweißstationen (1) transportiert werden.

9. Verfahren nach Anspruch 8, **dadurch gekennzeichnet, dass** die Batterien (10) von Arbeitsschiebern (8) auf das Transportband (4) geschoben werden.

10. Verfahren nach Anspruch 9 oder 8, **dadurch gekennzeichnet, dass** während des Schweißvorgangs über das Transportband (4) Batterien (10) sowohl in die Schweißmaschine als auch aus der Schweißmaschine heraus transportiert werden.

## Claims

1. Welding machine for the production of batteries comprising at least one welding station (1) and one conveyor belt (4), via which the batteries are feedable to the welding station (1), wherein the feeding of the batteries is controllable via a control device (9), wherein transport slides (7) are arranged at the longitudinal side of the conveyor belt (4), **characterised in that** a working belt (6) is provided, which is arranged adjacent to the conveyor belt (4) and that the working belt (6) is aligned parallel to the conveyor belt (4).

2. Welding machine according to claim 1, **characterised in that** the transport slides (7) are aligned in the direction of the working belt (6).

3. Welding machine according to claim 1 or 2, **characterised in that** a cover (11) is mounted between the working belt (6) and the conveyor belt (4).

4. Welding machine according to one or more of the preceding claims, **characterised in that** the transport slides (7) are aligned at right angles to the conveyor belt (4).

5. Welding machine according to one or more of the preceding claims, **characterised in that** working slides (8) are arranged at the longitudinal side of the working belt (6).

6. Welding machine according to claim 5, **characterised in that** the working slides (8) are aligned in the direction of the conveyor belt (4).

7. Welding machine according to claim 5 or 6, **characterised in that** the working slides (8) are arranged between the welding stations (1).

8. Method for the production of batteries by means of a welding machine comprising at least one welding station (1), wherein batteries (10) pass into the welding machine via a conveyor belt (4) and the conveyor belt (4) is stopped by a control device (9) as soon as a battery (10) is positioned in front of each transport slide (7) arranged at the longitudinal side of the conveyor belt (4), the batteries (10) are subsequently pushed by the transport slides (7) onto a working belt (6), which is arranged adjacent to the conveyor belt (4) and is aligned parallel to the conveyor belt (4), and are fed by the working belt (6) to the welding stations (1) and are welded by same and the batteries (10) are subsequently transported by the working belt (6) out of the welding stations (1).

9. Method according to claim 8, **characterised in that** the batteries (10) are pushed onto the conveyor belt (4) by working slides (8).

10. Method according to claim 8 or 9, **characterised in that** during the welding process, batteries (10) are transported into the welding machine as well as out of the welding machine via the conveyor belt (4).

## Revendications

1. Machine à souder destinée à la fabrication de batteries, comprenant au moins une station de soudage (1) et un tapis de transport (4) via lequel les batteries peuvent être amenées à la station de soudage (1), sachant que l'amenée des batteries est pilotable via un dispositif de contrôle (9), sachant que sur le côté longitudinal du tapis de transport (4) sont disposés des poussoirs de transport (7), **caractérisée en ce qu'**est prévu un tapis de travail (6) disposé au voisinage du tapis de transport (4), et que le tapis de travail (6) est orienté parallèle au tapis de transport (4).

2. Machine à souder selon la revendication 1, **caractérisée en ce que** les poussoirs de transport (7) sont orientés en direction du tapis de travail (6).

3. Machine à souder selon la revendication 1 ou 2, **caractérisée en ce qu'**entre le tapis de travail (6) et le tapis de transport (4) a été fixé un couvercle (11).

4. Machine à souder selon l'une ou plusieurs des revendications précédentes, **caractérisée en ce que** les poussoirs de transport (7) sont orientés perpendiculairement au tapis de transport (4).

5. Machine à souder selon l'une ou plusieurs des revendications précédentes, **caractérisée en ce que** sur le côté longitudinal du tapis de travail (6) sont disposés des poussoirs de travail (8).

6. Machine à souder selon la revendication 5, **caractérisé en ce que** les poussoirs de travail (8) sont orientés en direction du tapis de travail (4).

7. Machine à souder selon la revendication 6 ou 5, **caractérisée en ce que** les poussoirs de travail (8) sont disposés entre les stations de soudage (1).

8. Procédé de fabrication de batteries au moyen d'une machine à souder qui comprend au moins une station de soudage (1), sachant que des batteries (10) pénètrent via un tapis de transport (4) dans la machine à souder, et que le tapis de transport (4) est retenu par un dispositif de contrôle (9) dès qu'une batterie (10) est positionnée devant chaque poussoir de transport (7) disposé contre le côté longitudinal du tapis de transport (4), les batteries (10) sont ensuite poussées par les poussoirs de transport (7) sur un tapis de travail (6) disposé au voisinage du tapis de transport (4), tapis de travail qui est orienté parallèle au tapis de transport (4), puis sont amenées par le tapis de travail (6) aux stations de soudage (1) et sont soudées par ces dernières, et que les batteries (10) sont ensuite transportées par le tapis de travail (6) hors des stations de soudage (1).

9. Procédé selon la revendication 8, **caractérisé en ce que** les batteries (10) sont poussées par des poussoirs de travail (8) sur le tapis de transport (4),

10. Procédé selon la revendication 9 ou 8, **caractérisé en ce que** pendant l'opération de soudage, des batteries (10) sont, via le tapis de transport (4), aussi bien transportées vers l'intérieur de la machine à souder que transportées vers l'extérieur de celle-ci.
